# EUROPÄISCHE PATENTSCHRIFT

(11) **EP 0 479 728 B1**
(45) Veröffentlichungstag und Bekanntmachung des Hinweises auf die Patenterteilung: **22.02.1995**
(21) Anmeldenummer: 91810756.6
(22) Anmeldetag: 26.09.1991
(51) Int. Cl.: C09B 1/40, C09B 1/51, C08K 5/08, C08L 101/00

(54) **Anthrachinone mit langkettigen Acylaminogruppen und deren Verwendung**
Anthraquinones having long chain acylamino groups and their utilization
Anthraquinones avec des groupes acylamino à longue chaîne et leur utilisation

(30) Priorität: 05.10.1990 CH 3217/90
(43) Veröffentlichungstag der Anmeldung: 08.04.1992
(73) Patentinhaber: CIBA-GEIGY AG, 4002 Basel (CH)
(72) Erfinder: Wallquist, Olof, Dr., CH-1723 Marly (CH); Wooden, Gary, Dr., CH-1716 Oberschrot (CH)

(56) Entgegenhaltungen:
- CH-A- 533 662
- DE-A- 1 928 131
- GB-A- 1 271 040

## Beschreibung

Die Erfindung betrifft bestimmte Anthrachinone mit langkettigen Acylaminogruppen, Kunststoffe enthaltend in der Masse derartige Verbindungen sowie die Verwendung dieser Anthrachinone zur Massefärbung von Kunststoffen.

An Verbindungen, die in der Massefärbung von Kunststoffen Einsatz finden, werden sehr hohe Anforderungen gestellt. So müssen sie in dem zu färbenden Kunststoff eine gute Dispergierbarkeit aufweisen, dürfen aber nicht zur Migration neigen. In Anbetracht der hohen Verarbeitungstemperaturen von Kunststoffen (in der Praxis oft bei ca. 250-300°C) müssen sich solche Verbindungen zudem durch eine hohe Hitzebeständigkeit auszeichnen. Die gefärbten Kunststoffprodukte sollen je nach Anwendung auch eine entsprechend hohe Lichtechtheit und Wetterbeständigkeit aufweisen.

Gewisse Anthrachinonderivate mit langkettigen Acylaminosubstituenten für die Massefärbung von Kunststoffen sind in den US 3,899,504, GB 1,338,886, DE-A 2,132,394 und DE-A 2,123,963 beschrieben. Sie erfüllen jedoch nicht immer die heutigen Anforderungen hinsichtlich Dispergierbarkeit, Transparenz, Hitzebeständigkeit und Echtheiten.

Es wurde nun gefunden, dass bestimmte Anthrachinonpigmente mit langkettigen Acylaminogruppen all diese, für die Massefärbung von Kunststoffen erwünschte Eigenschaften aufweisen, und die damit gefärbten Produkte sich durch sehr gute Echtheiten auszeichnen.

Gegenstand vorliegender Erfindung sind Kunststoffe enthaltend in der Masse ein Anthrachinon mit langkettigen Acylaminogruppen der Formel I oder II 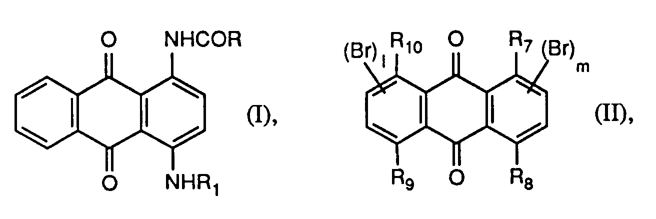
worin R einen Rest R₂ oder R₃ bedeutet, wobei
R₂ C₁₀-C₃₅-Alkyl oder C₁₀-C₃₅-Alkenyl ist und
R₃ für einen Rest der Formel III 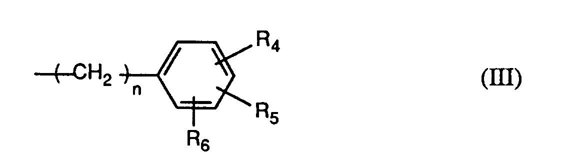
steht, worin R₄ einen Rest -NHR₂, -N(R₂)₂, -OR₂ oder -SR₂ bedeutet, R₅ und R₆ unabhängig voneinander H, C₁-C₄-Alkyl, C₁-C₄-Alkoxy, Halogen oder Nitro bedeuten, und n Null, 1 oder 2 ist, R₁ für C₁-C₅-Alkyl oder für einen Rest der Formel IV steht 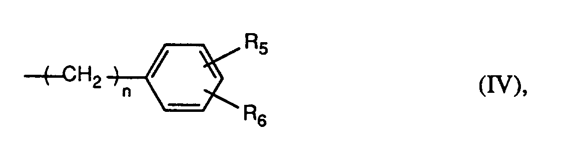
und worin in Formel II zwei der Reste R₇, R₈, R₉ und R₁₀ -OH und die anderen zwei -NHCOR bedeuten, R die gleiche Bedeutung wie in Formel I hat und l und m unabhängig voneinander Null, 1 oder 2 bedeuten.

Vereinzelte weitere Anthrachinone, die u.a auch langkettige Acylaminosubstituenten aufweisen, sind ebenfalls schon beschrieben, sie werden aber durchwegs für andere Anwendungen eingesetzt. So beschreibt die DE-OS 3,240,036 1,4-Bis(acylamino)anthrachinone und deren Verwendung als Flüssigkristalle; die US 4,614,804 offenbart 8-Amino-1-acylamino-4,5-dihydroxyanthrachinone, die in Farbbädern für die Färbung von Cellulosegeweben eingesetzt werden; die US 3,963,763 beschreibt bestimmte 1-Amino-4-alkylamino (mit 1-6 C-Atomen im Alkylrest)-anthrachinone mit verzweigten, gegebenenfalls langkettigen Subtitutenten in 2-Stellung sowie deren Verwendung als Farbstoffe zum Färben synthetischer Fasern mit Farbstofflösungen.

In der GB 1,271,040 werden unter anderem bestimmte Anthrachinonderivate der oben dargestellten Formel I beschrieben (Verbindungen mit R gleich C₁-C₁₇-Alkyl), und es wird ausgeführt, dass sie sich als Farbstoffe in einem Verfahren zum kontinuierlichen Färben synthetischer Fasermaterialien durch Imprägnierung mit Farbstofflösungen in mit Wasser nicht mischbaren organischen Lösungsmitteln eignen. Die synthetischen Fasermaterialien können in Form von Geweben und Gewirken vorliegen; es handelt sich dabei insbesondere um Polyester, Polyamide, Polyurethane oder Polyolefine.

Die vorliegenden Verbindungen der Formel I mit R gleich C₁₈-C₃₅-Alkyl oder C₁₈-C₃₅-Alkenyl bzw. mit R gleich R₃ sowie die Verbindungen der Formel II sind neu. Ein weiterer Gegenstand der Erfindung sind somit auch Anthrachinone mit langkettigen Acylaminogruppen der Formel Ia oder II 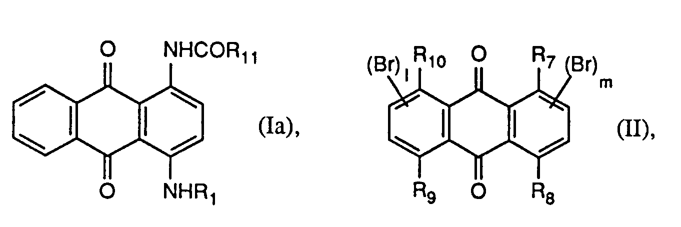
worin R₁₁ einen Rest R₁₂ oder R₃ bedeutet, wobei R₁₂ C₁₈-C₃₅-Alkyl oder C₁₈-C₃₅-Alkenyl ist, und R₁, R₃, R₇ bis R₁₀ und l und m die oben angegebene Bedeutung haben.

Bedeutet R einen Rest R₂, so können die C₁₀-C₃₅-Alkyl- oder Alkenylreste geradkettig oder verzweigt sein. Beispiele geeigneter Alkyl- oder Alkenylreste sind n-Decyl, n-Undecyl, n-Dodecyl, n-Tridecyl, Isotridecyl, n-Tetradecyl, n-Pentadecyl, n-Hexadecyl, 1-Methylpentadecyl, n-Octadecyl, n-Eicosyl, n-Tetracosyl, n-Hexacosyl, n-Triacontyl, 8-Heptadecenyl und 8-Pentadecenyl. Das Gleiche gilt für die R₂ Gruppen des Substituenten R₄ der Reste der Formel III.

R₂ ist vorzugsweise geradkettig. Eine bevorzugte Bedeutung von R₂ ist C₁₀-C₂₀-Alkyl, insbesondere C₁₁-C₁₈-Alkyl.

Bedeutet R einen Rest R₃ der Formel III, ist n vorzugsweise Null, R₄ bedeutet vorzugsweise einen Rest -OR₂ und R₅ und R₆ sind unabhängig voneinander vorzugsweise Fluor, Chlor oder Brom, C₁-C₃-Alkyl, wie Methyl, Ethyl, Propyl, Isopropyl, C₁-C₃-Alkoxy und insbesondere H.

Besonders bevorzugt sind Reste der Formel III, worin R₅ und R₆ für H stehen und der Substituent R₄ in para-Stellung ist.

Bedeutet R₁ C₁-C₅-Alkyl, so können diese Reste geradkettig oder verzweigt sein, wie z.B. Methyl, Ethyl, n-Propyl, Isopropyl, n-Butyl, tert.Butyl, n-Pentyl oder Isopentyl. R₁ ist vorzugsweise Methyl oder Ethyl oder insbesondere ein Rest der Formel IV mit n gleich Null und R₅ und R₆ unabhängig voneinander gleich Fluor, Chlor oder Brom, C₁-C₃-Alkyl, C₁-C₃-Alkoxy und insbesondere gleich H.

Unter den Verbindungen der Formel II sind insbesondere jene bevorzugt, worin R₈ und R₁₀ -OH und R₇ und R₉ -NHCOR bedeuten, und besonders solche, worin R für p-Octadecanoxyphenyl, für Heptadecyl oder für Undecyl steht. Die Summe von l + m ist vorzugsweise nicht grösser als 2, Und ist insbesondere gleich 1 oder besonders bevorzugt gleich Null.

Unter den Verbindungen der Formel I bedeutet R vorzugsweise p-Octadecanoxyphenyl, Undecyl, Pentadecyl oder Heptadecyl und R₁ ist vorzugsweise Phenyl.

Am meisten bevorzugt sind die Verbindung der Formel I mit R gleich Heptadecyl und R₁ gleich Phenyl und die Verbindung der Formel II mit R₈ und R₁₀ gleich -OH und R₇ und R₉ gleich -NHCOC₁₇H₃₅.

Die Verbindungen der Formeln I und II können in Analogie zu an sich bekannten Verfahren hergestellt werden, z.B. indem die entsprechenden aminsubstituierten Anthrachinone der Formel V oder VI 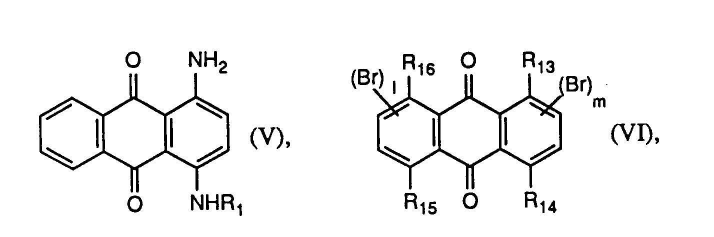
worin R₁, l und m die oben angegebene Bedeutung haben, und zwei der Reste R₁₃, R₁₄, R₁₅ und R₁₆ -OH und die anderen zwei -NH₂ bedeuten, mit einem Säurehalogenid der Formel VII

XCOR (VII),

worin R die oben angegebene Bedeutung hat und X für Halogen, z.B. für Brom oder insbesondere für Chlor, steht, umgesetzt werden.

Die Verbindungen der Formel V, VI und VII sind bekannt oder können auf bekannte Weise hergestellt werden; sie sind zum Teil auch im Handel erhältlich.

Die Umsetzung der Verbindungen V oder VI mit der Verbindung VII wird zweckmässig in Gegenwart eines organischen inerten Lösungsmittels bei Normal- oder Ueberdruck, mit oder ohne Katalysator, durchgeführt. Geeignete Lösungsmittel sind z.B. Toluol, Xylol, Chlorbenzol, Dichlorbenzole, wie o-Dichlorbenzol, ferner Trichlorbenzole, Nitrobenzol oder Gemische aromatischer und/oder aliphatischer Lösungsmittel, wie ®Shellsole. Das bevorzugte Lösungsmittel ist Chlorbenzol.

Die Isolierung der Produkte erfolgt nach ihrer Synthese wie üblich z.B. durch Filtration. Das Nutschgut wird z.B. mit einem der bereits oben angegebenen Lösungsmittel und dann falls zweckmässig noch mit Methanol oder Wasser gewaschen. Die Produkte werden im allgemeinen in guter Ausbeute und Reinheit erhalten und können im Prinzip selbst ohne weitere Reinigung in feinverteilter Form zum Massefärben von Kunststoffen verwendet werden.

Sofern ihre Reinheit und/oder Partikel-Form und -Grösse zur Anwendung als Pigmente noch nicht genügend bzw. optimal sind, können die anmeldungsgemässen Verbindungen weiter konditioniert werden. Unter Konditionierung versteht man die Herstellung einer feinen, für die Applikation optimalen Partikel-Form und -Grösse, beispielsweise durch Trockenmahlung mit oder ohne Salz, durch Lösungsmittel- oder wässrige Mahlung, durch Salzknetung oder durch eine nachträgliche thermische Lösungsmittelbehandlung.

Thermische Lösungsmittelbehandlungen können z.B. in organischen Lösungsmitteln, vorzugsweise mit solchen, die über 100°C sieden, durchgeführt werden. Als besonders geeignet hierfür erweisen sich durch Halogenatome, Alkyl- oder Nitrogruppen substituierte Benzole, wie Toluol, Chlorbenzol, o-Dichlorbenzol, Xylole oder Nitrobenzol, Alkohole, wie Isopropanol oder Isobutanol, ferner Ketone, wie Cyclohexanon, Ether, wie Ethylenglykol-monomethyl- oder -monoethylether, Amide, wie Dimethylformamid oder N-Methyl-pyrrolidon, sowie Dimethylsulfoxyd, Sulfolan oder Wasser allein, gegebenenfalls unter Druck. Man kann die Nachbehandlung auch in Wasser in Gegenwart von organischen Lösungsmitteln und/oder mit Zusatz von oberflächenaktiven Substanzen oder aliphatischen Aminen, oder in flüssigem Ammoniak, durchführen.

Je nach Konditionierung und/oder Applikationszweck kann es von Vorteil sein, den Verbindungen der Formel I oder II gewisse Mengen an texturverbessernden Mitteln vor oder nach dem Konditionierprozess zuzufügen. Als solche kommen insbesondere Fettsäuren mit mindestens 18 C-Atomen, beispielsweise Stearin- oder Behensäure oder deren Amide oder Metallsalze, insbesondere Mg-Salze in Betracht. Die texturverbessernden Mittel werden vorzugsweise in Mengen von 0,1-30 Gew.%, insbesondere 2-15 Gew.%, bezogen auf das Endprodukt, zugesetzt.

Die anmeldungsgemässen Verbindungen der Formel I oder II können aber aufgrund ihrer ausgezeichneten Verträglichkeit oft ohne weitere Konditionierung, wie mechanische Zerkleinerung oder Präparierung, direkt in Kunststoffe zu deren Färbung eingearbeitet werden.

Obwohl die vorliegenden Anthrachinonderivate insbesondere zum Massefärben von Polyolefinen, ganz besonders von Polypropylen, geeignet sind, können sie auch vorteilhaft zum Massefärben von anderen Polymeren, z.B. Polyvinylchlorid, Fluorpolymerisate, wie z.B. Polyfluorethylen, Polytrifluorchlorethylen oder Tetrafluorethylen/Hexafluorpropylen-Mischpolymerisat, Silikonharze, insbesondere aber von Ingenieurwerkstoffen (Engineering Plastics), wie z.B. Polycarbonate, Polyacrylate, Polymethacrylate, Polystyrol, ABS, Polyester, insbesondere Polyalkylenterephthalate, wie Polybutylenterephthalat (PBT) oder Polyethylenterephthalat (PET), Polyamide, Polyetherketone, Polyurethane, einzeln oder in Mischungen, verwendet werden. Zweckmässig werden sie in einer Konzentration von 0,01 bis 10, vorzugsweise 0,01-5 Gew.%, bezogen auf das Polymere, eingesetzt.

Als Beispiele für Polyolefine, die mit den Verbindungen der Formel I oder II gefärbt werden können, seien Polyethylen hoher und niederer Dichte (HD-PE, LD-PE und LLD-PE), Polyisobutylen und insbesondere Polypropylen, sowie Copolymere von Polyolefinen mit z.B. Polyethern, Polyetherketonen oder Polyurethanen, erwähnt. Bevorzugt ist Polypropylen.

Die Färbung erfolgt nach den üblichen Verfahren, beispielsweise durch Mischen einer Verbindung der Formel I oder II oder eines Gemisches solcher Verbindungen mit dem Kunststoffgranulat oder -pulver, ohne es vorher in ein Präparat einarbeiten zu müssen, und Extrudieren der Mischung zu Fasern, Folien oder Granulaten. Letztere können dann beispielsweise im Spritzgussverfahren zu Gegenständen verformt werden.

Die erhaltenen blau bis violettfarbenen Ausfärbungen weisen hohe Reinheit und hohe Sättigung auf und zeichnen sich durch gute Transparenz sowie durch gute Beständigkeit, insbesondere gegen Hitze und Licht aus. Es muss besonders hervorgehoben werden, dass die anmeldungsgemässen Anthrachinonderivate trotz ihrer ausgezeichneten Dispergierbarkeit und Transparenz der damit erhaltenen Ausfärbungen sehr gute Migrationseigenschaften und Lichtechtheiten aufweisen. Ein besonderer Vorteil von mit den Verbindungen der Formel I oder II gefärbten Polyethylengegenständen besteht zudem darin, dass sie, insbesondere im Falle von HD-PE, keine erhöhte Neigung zu Verzugs- und Deformationserscheinungen zeigen.

Die mit den Verbindungen der Formel I und II gefärbten Fasern, insbesondere die Polypropylenfasern sind brillant, besitzen ausgezeichnete textile Eigenschaften, wie z.B. Lichtbeständigkeit und Beständigkeiten gegenüber Wasch- und Lösungsmitteln. Der Einsatz von Verbindungen der Formeln I oder II ist auch mit einigen technischen Vorteilen verbunden, wie z.B. sehr leichte Dispergierbarkeit, weniger Faserbrüche, geringere Spinndüsenverstopfung und bessere Filterzeiten.

Die nachfolgenden Beispiele erläutern die Erfindung.

Beispiel 1: Zu einer Suspension von 6,8 g 1,5-Diamino-4,8-dihydroxyanthrachinon in 200 ml Chlorbenzol werden 25,6 g R-COCl gegeben. Die Suspension wird auf 125°C erhitzt, 16 h bei dieser Temperatur gerührt, abkühlen gelassen, filtriert und das Nutschgut wird mit Methanol gewaschen. Das trockene Nutschgut wird mit Dichlormethan während 2 ¹/₂ Tagen im Soxhlet extrahiert. Der Rückstand in der Hülse wird in Methanol aufgeschlämmt und filtriert, kurz mit wenig Dichlormethan und dann mit Methanol gewaschen und im Vakuumschrank getrocknet. Man erhält 13,9 g (55 % der Theorie) der Verbindung der Formel 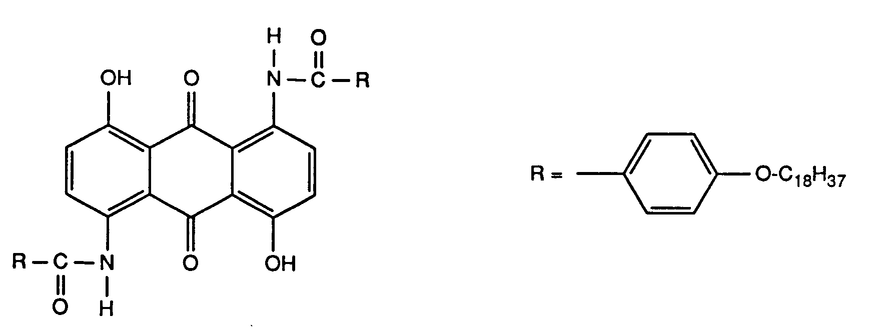
als violettes Produkt.

| Analyse für C₆₄H₉₀N₂O₈ | | | |
|---|---|---|---|
| | C | H | N |
| Berechnet: | 75,7 | 8,93 | 2,76 |
| Gefunden: | 75,5 | 9,08 | 2,67 |

Beispiele 2 und 3: Verfährt man wie im Beispiel 1 mit der Ausnahme, dass man das Säurechlorid der Formel R-COCl mit der äquivalenten Menge eines Säurechlorids der Formel Y-COCl ersetzt, wobei Y die in der nachfolgenden Tabelle angegebene Bedeutung hat, so erhält man entsprechende Verbindungen der unten dargestellten Formel, wobei man anstelle der Soxhletmethode das feuchte Nutschgut jeweils in Methanol kocht.

Die Resultate sind in der nachfolgenden Tabelle zusammengefasst.

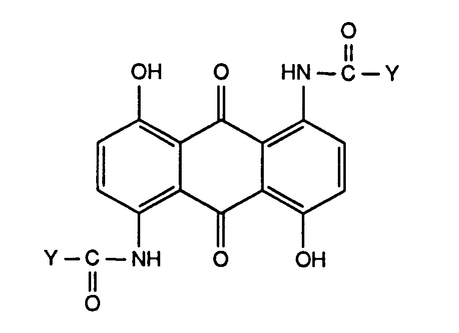

| Beispiel | Y | Ausbeute | Farbe | Analyse % | | | |
|---|---|---|---|---|---|---|---|
| | | | | | C | H | N |
| 2 | C₁₇H₃₅ - | 89 % | violett | Ber.: | 74,77 | 9,79 | 3,49 |
| | | | | Gef.: | 74,99 | 10,03 | 3,38 |
| 3 | C₁₁H₂₃ - | 88% | violett | Ber.: | 71,89 | 8,57 | 4,41 |
| | | | | Gef.: | 72,16 | 8,91 | 4,21 |

Beispiel 4: Zu einer Suspension von 12,6 g 1-Amino-4-anilinoanthrachinon in 150 ml Chlorbenzol werden 24,5 g R-COCl gegeben. Die Suspension wird auf 125°C erhitzt, 17 h bei dieser Temperatur gerührt, abkühlen gelassen, filtriert und kurz mit Chlorbenzol (kalt) gewaschen. Das Nutschgut wird in Dichlormethan gelöst, nach Zugabe von Methanol (Fällung) 1 h am Rückfluss gekocht, abgekühlt und filtriert. Nach nochmaligem Waschen mit Methanol und Trocknen im Vakuumschrank erhält man 21 g (76 % der Theorie) der Verbindung der Formel 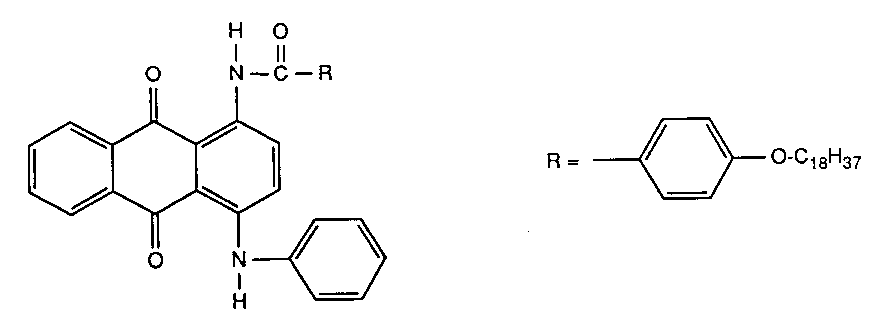
als violettes Produkt.

| Analyse für C₄₅H₅₄N₂O₄ | | | |
|---|---|---|---|
| | C | H | N |
| Berechnet: | 78,68 | 7,92 | 4,08 |
| Gefunden: | 78,75 | 7,91 | 3,82 |

Beispiele 5 bis 7: Man verfährt wie im Beispiel 4 mit der Ausnahme, dass man das Säurechlorid der Formel R-COCl mit der äquivalenten Menge eines Säurechlorids der Formel Y-COCl ersetzt, wobei Y die in der nachfolgenden Tabelle angegebene Bedeutung hat. Zudem wird jeweils nach der Reaktion zur Trockne eingeengt, der Rückstand in Methanol aufgenommen und rückflussiert, abgekühlt und erst jetzt durch Filtration isoliert. Nach Umkristallisation wie bei Beispiel 1 erhält man entsprechende Verbindungen der unten dargestellten Formel.

Die Resultate sind in der nachfolgenden Tabelle zusammengefasst.

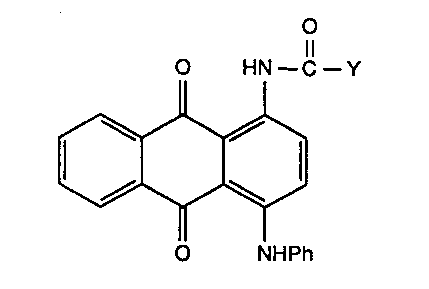

| Beispiel | Y | Ausbeute | Farbe | Analyse % | | | |
|---|---|---|---|---|---|---|---|
| | | | | | C | H | N |
| 5 | C₁₁H₂₃ | 60 % | violett | Ber.: | 77,39 | 7,31 | 5,64 |
| | | | | Gef.: | 77,22 | 7,04 | 5,62 |
| 6 | C₁₅H₃₁ | 77 % | violett | Ber.: | 78,22 | 8,02 | 5,07 |
| | | | | Gef.: | 78,10 | 7,93 | 4,81 |
| 7 | C₁₇H₃₅ | 46 % | violett | Ber.: | 78,58 | 8,33 | 4,82 |
| | | | | Gef.: | 79,02 | 8,05 | 4,92 |

Beispiel 8: 1 g des Pigmentes nach Beispiel 7 und 1000 g des Kunststoffs Polyethylenterephthalat (PET, ®Melinor B90 der Firma ICI) werden während 15 Minuten gemischt und während 4 Stunden bei 90°C vorgetrocknet. Die Mischung wird zweimal bei 270°C extrudiert, dann granuliert und wiederum bei 90°C während 4 Stunden getrocknet. Das so hergestellte gefärbte Granulat wird jeweils bei 270°C, 280°C und 290°C nach 5-minütigem Verweilen bei diesen Temperaturen zu Plättchen verspritzt. Man erhält violette Ausfärbungen mit guter Hitze- und Lichtbeständigkeit.

Beispiel 9: 400 g Polypropylengranulat (®DAPLEN PT-55, Chemie LINZ) und 4 g des nach Beispiel 1 erhaltenen Pigmentes werden in einer Mischtrommel intensiv vermischt. Das so behandelte Granulat wird bei 260°C bis 285°C nach dem Schmelzspinnverfahren versponnen. Man erhält violett gefärbte Fasern mit sehr guten textilen Eigenschaften wie Licht- und Nassbeständigkeiten.

Beispiel 10: Zu einer Suspension von 1,25 g 1,5-Diamino-brom-4,8-dihydroxyanthrachinon in 15 ml Xylol bei 100°C werden 4,16 g Stearinsäurechlorid in 5 ml Xylol im Laufe von 10 Min. zugetropft. Die Suspension wird auf 125°C erhitzt, 16 Std. bei dieser Temperatur gerührt, abgekühlt, filtriert, der Rückstand mit Methanol gewaschen und getrocknet. Der Festkörper wird dann in Chlorophorm bei Raumtemperatur gelöst und durch Zugabe von Methanol und durch Abkühlung kristallisiert. Filtration und Trocknen der Festkörper ergaben 2,3 g (82 %) der Verbindung 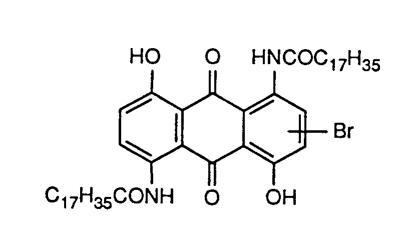
als violettes Pulver.

## Patentansprüche

1. Kunststoff enthaltend in der Masse ein Anthrachinon mit langkettigen Acylaminogruppen der Forme I oder II 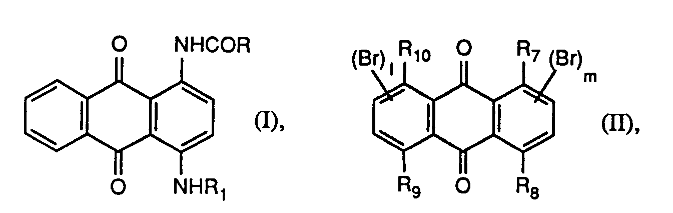 worin R einen Rest R₂ oder R₃ bedeutet, wobei
R₂ C₁₀-C₃₅-Alkyl oder C₁₀-C₃₅-Alkenyl ist und
R₃ für einen Rest der Formel III 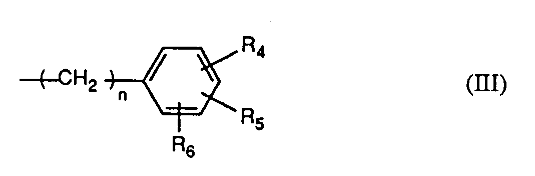 steht, worin R₄ einen Rest -NHR₂, -N(R₂)₂, -OR₂ oder -SR₂ bedeutet, R₅ und R₆ unabhängig voneinander H, C₁-C₄-Alkyl, C₁-C₄-Alkoxy, Halogen oder Nitro bedeuten, und n Null, 1 oder 2 ist, R₁ für C₁-C₅-Alkyl oder für einen Rest der Formel IV steht 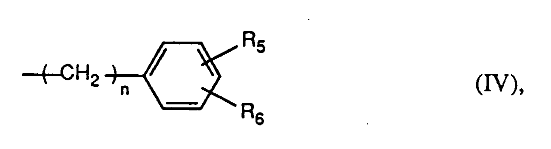 und worin in Formel II zwei der Reste R₇, R₈, R₉ und R₁₀ -OH und die anderen zwei -NHCOR bedeuten, R die gleiche Bedeutung wie in Formel I hat und l und m unabhängig voneinander Null, 1 oder 2 bedeuten.

2. Kunststoff nach Anspruch 1, worin R₂ C₁₀-C₂₀-Alkyl, insbesondere C₁₁-C₁₈-Alkyl bedeutet.

3. Kunststoff nach Anspruch 1, worin R₃ ein Rest der Formel III ist mit n gleich Null, R₄ -OR₂ ist und R₅ und R₆ unabhängig voneinander Fluor, Chlor oder Brom, C₁-C₃-Alkyl, C₁-C₃-Alkoxy und insbesondere H sind.

4. Kunststoff nach Anspruch 1, worin R₁ Ethyl, Methyl oder insbesondere einen Rest der Formel IV bedeutet mit n gleich Null und R₅ und R₆ unabhängig voneinander Fluor, Chlor oder Brom, C₁-C₃-Alkyl, C₁-C₃-Alkoxy und insbesondere H sind.

5. Kunststoff nach Anspruch 1, worin im Rest der Formel III R₅ und R₆ für H stehen und der Substituent R₄ in para-Stellung ist.

6. Kunststoff nach Anspruch 1, worin R₈ und R₁₀ -OH und R₇ und R₉ -NHCOR bedeuten.

7. Kunststoff nach Anspruch 1 enthaltend die Verbindung der Formel I mit R gleich Heptadecyl und R₁ gleich Phenyl oder die Verbindung der Formel II mit R₈ und R₁₀ gleich -OH und R₇ und R₉ gleich -NHCOC₁₇H₃₅.

8. Kunststoff nach Anspruch 1, dadurch gekennzeichnet, dass er ein Polyolefin, insbesondere Polypropylen ist.

9. Kunststoff nach Anspruch 1 enthaltend 0,01-10 Gew.% bezogen auf das Polymere einer Verbindung der Formel I oder II.

10. Anthrachinon mit langkettigen Acylaminogruppen der Formel Ia oder II 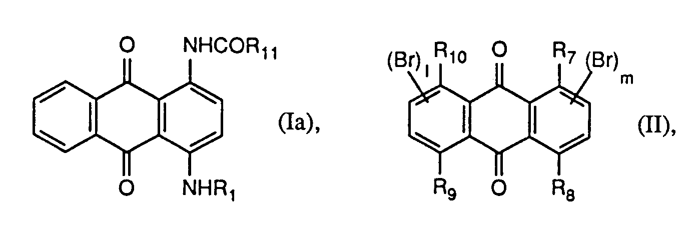 worin R₁₁ einen Rest R₁₂ oder R₃ bedeutet, wobei R₁₂ C₁₈-C₃₅-Alkyl oder C₁₈-C₃₅-Alkenyl ist, und R₁, R₃, R₇ bis R₁₀ und l und m die in Anspruch 1 angegebene Bedeutung haben.

## Claims

1. A plastics material comprising in the mass an anthraquinone which contains long-chain acylamino groups, of formula I or II 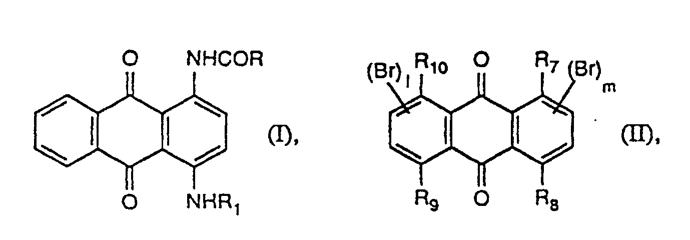 wherein R is a radical R₂ or R₃, where
R₂ is C₁₀-C₃₅alkyl or C₁₀-C₃₅alkenyl, and
R₃ is a radical of formula III 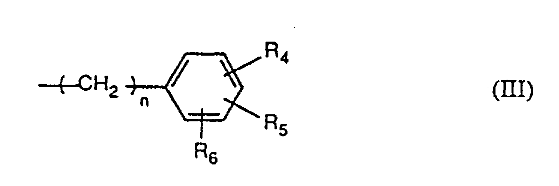 wherein R₄ is a radical -NHR₂, -N(R₂)₂, -OR₂ or -SR₂, R₅ and R₆ are each independently of the other H, C₁-C₄alkyl, C₁-C₄alkoxy, halogen or nitro, and n is zero, 1 or 2, R₁ is C₁-C₅alkyl or a radical of formula IV 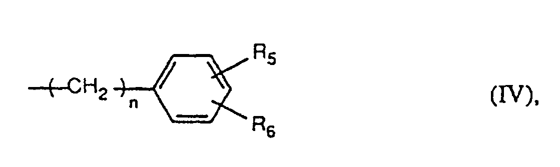 and wherein, in formula II, two of the radicals R₇, R₈, R₉ and R₁₀ are -OH and the other two are -NHCOR, R is as defined for formula I and l and m are each independently of the other zero, 1 or 2.

2. A plastics material according to claim 1, wherein R₂ is C₁₀-C₂₀alkyl, especially C₁₁-C₁₈alkyl.

3. A plastics material according to claim 1, wherein R₃ is a radical of formula III in which n is zero, R₄ is -OR₂, and R₅ and R₆ are each independently of the other fluoro, chloro or bromo, C₁-C₃alkyl, C₁-C₃alkoxy and, in particular, H.

4. A plastics material according to claim 1, wherein R₁ is ethyl, methyl or, in particular, a radical of formula IV, where n is zero and R₅ and R₆ are each independently of the other fluoro, chloro or bromo, C₁-C₃alkyl, C₁-C₃alkoxy and, in particular, H.

5. A plastics material according to claim 1, wherein, in the radical of formula III, R₅ and R₆ are H and the substituent R₄ is in para-position.

6. A plastics material according to claim 1, wherein R₈ and R₁₀ are -OH and R₇ and R₉ are -NHCOR.

7. A plastics material according to claim 1 comprising the compound of formula I where R is heptadecyl and R₁ is phenyl, or the compound of formula II where R₈ and R₁₀ are -OH and R₇ and R₉ are -NHCOC₁₇H₃₅.

8. A plastics material according to claim 1 which is a polyolefin, especially polypropylene.

9. A plastics material according to claim 1 containing 0.01 to 10 % by weight, based on the polymer, of a compound of formula I or II.

10. An anthraquinone containing long-chain acylamino groups of formula Ia or II 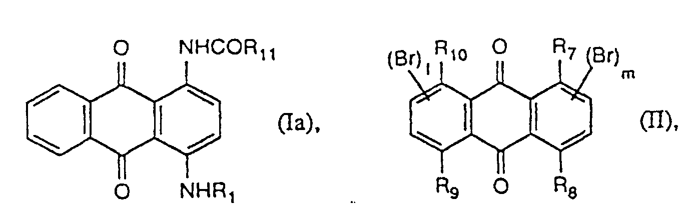 wherein R₁₁ is a radical R₁₂ or R₃, where R₁₂ is C₁₈-C₃₅alkyl or C₁₈-C₃₅-alkenyl, and R₁, R₃, R₇ to R₁₀ and l and m are as defined in claim 1.

## Revendications

1. Matière synthétique contenant dans la masse une anthraquinone ayant des groupes acylamino à longue chaîne de formule I ou II 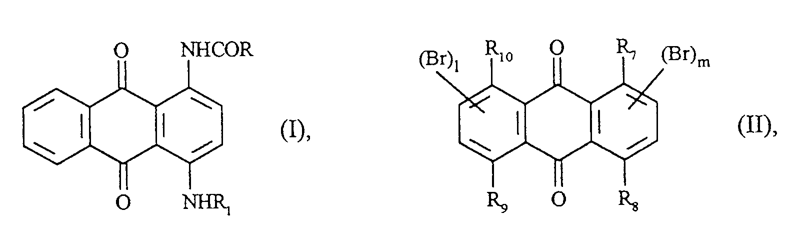 dans lesquelles R représente un reste R₂ ou R₃, où
R₂ est un reste alkyle en C₁₀-C₃₅ ou alcényle en C₁₀-C₃₅, et
R₃ représente un reste de formule III 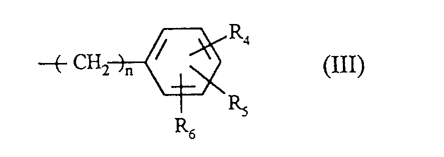 dans laquelle R₄ représente un reste -NHR₂, -N(R₂)₂, -OR₂ ou -SR₂, R₅ et R₆ représentent indépendamment l'un de l'autre H ou un reste alkyle en C₁-C₄, alcoxy en C₁-C₄, halogène ou nitro, et n est 0, 1 ou 2, R₁ représente un reste alkyle en C₁-C₅ ou un reste de formule IV 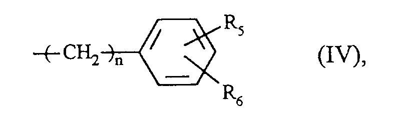 et, dans la formule II, deux des restes R₇, R₈, R₉ et R₁₀ représentent - OH et les deux autres -NHCOR, R a la même signification que dans la formule I et l et m sont indépendamment l'un de l'autre 0, 1 ou 2.

2. Matière synthétique selon la revendication 1, dans laquelle R₂ représente un alkyle en C₁₀-C₂₀, en particulier un alkyle en C₁₁-C₁₈.

3. Matière synthétique selon la revendication 1, dans laquelle R₃ est un reste de formule III dans laquelle n est 0, R₄ est -OR₂ et R₅ et R₆ sont indépendamment l'un de l'autre un atome de fluor, de chlore ou de brome, un reste alkyle en C₁-C₃, alcoxy en C₁-C₃, et en particulier H.

4. Matière synthétique selon la revendication 1, dans laquelle R₁ est un éthyle, un méthyle ou en particulier un reste de formule IV dans laquelle n est 0 et R₅ et R₆ représentent indépendamment l'un de l'autre un atome de fluor, de chlore ou de brome, un reste alkyle en C₁-C₃, alcoxy en C₁-C₃, et en particulier H.

5. Matière synthétique selon la revendication 1, dans laquelle, dans le reste de formule III, R₅ et R₆ représentent H et le substituant R₄ est en position para.

6. Matière synthétique selon la revendication 1, dans laquelle R₈ et R₁₀ signifient -OH et R₇ et R₉ signifient -NHCOR.

7. Matière synthétique selon la revendication 1, contenant le composé de formule I dans laquelle R est un heptadécyle et R₁ est un phényle ou le composé de formule II dans laquelle R₈ et R₁₀ signifient -OH et R₇ et R₉ signifient -NHCOC₁₇H₃₅.

8. Matière synthétique selon la revendication 1, caractérisée en ce qu'il s'agit d'une polyoléfine, en particulier de polypropylène.

9. Matière synthétique selon la revendication 1, contenant 0,01 à 10 % en masse par rapport au polymère d'un composé de formule I ou II.

10. Anthraquinone contenant des groupes acylamino à longue chaîne de formule Ia ou II 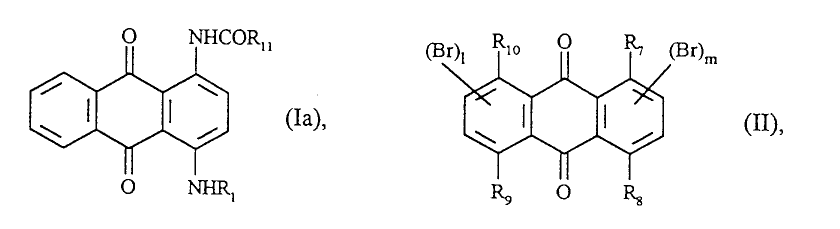 dans lesquelles R₁₁ représente un reste R₁₂ ou R₃, R₁₂ étant un reste alkyle en C₁₈-C₃₅ ou alcényle en C₁₈-C₃₅, et R₁, R₃, R₇ à R₁₀ et l et m ont la signification indiquée dans la revendication 1.
